# EUROPEAN PATENT APPLICATION

(11) **EP 2 803 689 A1**
(43) Date of publication of application: **19.11.2014**
(21) Application number: 13167585.2
(22) Date of filing: 14.05.2013
(51) Int. Cl.: C08G 77/20, C08G 77/26, C08G 77/28, C09D 175/16, C08L 83/08, C08K 5/00

(54) **Coating compositions containing polysiloxane Michael adducts**

(71) Applicant: 3M Innovative Properties Company, Saint Paul, MN 55133-3427 (US)
(72) Inventor: Audenaert, Frans, 2070 Zwijndrecht (BE)
(74) Representative: Kurz, Arnd

(57) **Abstract**

There is provided a curable composition comprising more than 50 % by weight of one or more compounds having at least two free radical polymerizable groups and at least 0.1 % by weight of one or more polysiloxane additives comprising from 5 to 250 SiO-units and one or more terminal groups T selected from

-N(R¹²)ᵣ[CH₂CHR⁹-C( =O)O-R¹⁰-(OCO-CR¹¹=CH₂)ₙ]₂₋ᵣ

or

-S-CH₂CHR⁹-C(=O)O-R¹⁰-(OCO-CR¹¹=CH₂)ₙ

wherein R12 represents a group having from 1 to 30 carbon atoms, which may contain sulfur, nitrogen and/or oxygen, r is 0 or 1, R10 represents a linking group containing from 1 to 30 carbon atoms, which may contain sulfur, nitrogen and/or oxygen atoms, R9 and R11 represent H or a CH3 group and n is 1 to 5. Also provided are methods of making the curable compositions. The curable compositions can be used to provide stain release and/or stain repellency properties to a substrate.

## Description

The present disclosure relates to curable compositions containing polysiloxane Michael adducts. The compositions are in particular suitable as coating compositions. The disclosure also relates to a method of making and coating the compositions and to substrates containing the cured compositions.

Surfaces that are made of plastics or synthetic polymers, such as for example surfaces made from polyvinylchloride (PVC), acrylonitril-butadiene-styrene (ABS), polyolefins, polycarbonates and many others are often used in household and/or public applications. Typical household applications include, for example, kitchen cabinets and worktops. Typical public applications include interior of public transport vehicles, such as trains, busses, trams or airplanes. These surfaces are often exposed to stains and dirt, such as residues of food, drinks or soap. In addition, public applications are often subject to paints, for example as a result of graffiti or other kinds of vandalism.

To maintain the original appearance and to protect the outer surface from staining and damage or to facilitate stain or dirt removal protective coatings can be applied. Such protective coatings may be based on organic silanes or silane-modified polysiloxanes as described for example in EP 2463325.

While silane based coatings show good repellency properties, they have the drawback that they require relatively high curing temperature, for example 130°C or higher, and for extended period of time, for example over 10 min. Many synthetic polymers do not withstand such curing conditions. Accordingly it is desirable to develop protective coating formulations with a fast curing profile at low temperature.

In the following there is provided a curable composition comprising
a. more than 50 % by weight of one or more compounds having at least two free radical polymerizable groups and
b. at least 0.1 % by weight of one or more polysiloxane additives comprising from 5 to 250 SiO-units and one or more terminal groups T selected from

   -N(R¹²)ᵣ-[CH₂CHR⁹-C(=O)O-R¹⁰-(OCO-CR¹¹=CH₂)ₙ]₂₋ᵣ

   or

   -S-CH₂CHR⁹-C(=O)O-R¹⁰-(OCO-CR¹¹=CH₂)ₙ

   wherein R12 represents a group having from 1 to 30 carbon atoms, which may contain sulfur, nitrogen and/or oxygen, r is 0 or 1, R10 represents a linking group containing from 1 to 30 carbon atoms, which may contain sulfur, nitrogen and/or oxygen atoms, R9 and R11 represent H or a CH3 group and n is 1 to 5.

In another aspect there is provided a method of making a curable composition as defined above comprising
a. forming a Michael adduct by reacting at a temperature of at least 35°C:
   i. a polysiloxane having at least one terminal nucleophilic group selected from a primary or secondary amino group or a thiol group and
   ii. a compound having at least two α,β-unsaturated carbonyl groups
b. mixing at least 0.1% by weight, based on the total weight of the composition, of the Michael adduct obtained in a) with at least 50% by weight, based on the total weight of the composition, of one or more compounds having at least two free radical polymerizable groups.

In a further aspect there is provided a method of providing a stain release and/or stain repellent coating on a substrate, comprising applying to at least a portion of a surface of the substrate a curable composition as defined above and curing the composition to obtain a coating.

In yet another aspect there is provided a coated substrate obtainable by the method as defined above.

The curable compositions provided herein can be applied and cured into a thin, protective coating on different substrates, in particular on substrates having a surface made of plastics or synthetic polymers. The curable compositions can be cured fast and at ambient temperature (i.e. between 10°C and 35°C) by using actinic radiation. The cured coating protects the outer surface from staining or dirt accumulation and/or facilitates stain or dirt removal. Because the cured compositions prevent stains from penetrating into the coated surface, the coated substrates typically have easy-to-clean properties and easy wipe-off of attached soil. Stains, for example made by markers or graffiti paints, can be conveniently removed with a wipe, typically without the need to use aggressive cleaning agents.

Before any embodiments of this disclosure are explained in detail, it is to be understood that the disclosure is not limited in its application to the details of compositions and the arrangement of components set forth in the following description. The invention is capable of other embodiments and of being practiced or of being carried out in various ways. Also, it is to be understood that the phraseology and terminology used herein is for the purpose of description and should not be regarded as limiting. Contrary to the use of "consisting", the use of "including," "containing", "comprising," or "having" and variations thereof is meant to be of broad scope and is meant to encompass the items listed thereafter, equivalents thereof and further items. The word "consisting of" is meant to be of limiting scope and is meant to encompass only the items listed thereafter and equivalents thereof but not any additional items. The term "consisting essentially of" has a meaning as defined in the description below.
The use of "a" or "an" is meant to encompass "one or more". Any numerical range recited herein is intended to include all values from the lower value to the upper value of that range. For example, a concentration range of from 1% to 50% is intended to be an abbreviation and to expressly disclose the values between the 1% and 50%, such as, for example, 2%, 40%, 10%, 30%, 1.5 %, 3.9 % and so forth.

The present disclosure provides a curable composition comprising a major amount of one or more compounds having at least two free radical polymerizable groups and a minor amount of a polysiloxane additive as defined above. With the term 'major amount' as used herein above and below is meant an amount that is more than 50% by weight based on the total weight of the curable composition. In accordance the term 'minor amount' refers to an amount that is less than 50% by weight based on the total weight of the curable composition. The polysiloxane additives are typically used in amounts between 0.1 and 40% by weight, preferably between 0.2 and 30% by weight based on the total weight of the curable composition. Particularly suitable compositions comprise polysiloxane additives in amounts up to 20% by weight based on the total weight of the curable composition.

The different compounds of the curable composition will now be described in greater detail.

### A. Polysiloxane additives

The polysiloxane additives herein provided have at least one polysiloxane moiety having from 5 to 250 SiO-units and at least one terminal group (also referred herein as group T). The polysiloxane additives are the reaction product of a Michael addition reaction and are further referred to as "Michael adducts". As used herein above and below the term 'Michael addition reaction' refers to a nucleophilic addition reaction of a compound having a nucleophilic group with a compound having an alpha, beta unsaturated carbonyl compound. The polysiloxane additives are the Michael adducts of a polysiloxane having at least one terminal nucleophilic group selected from a primary or secondary amino group or a thiol group and a compound having at least two, preferably at least three or even more α,β-unsaturated carbonyl groups. The Michael adducts thus obtained have at least one α,β-unsaturated carbonyl group at a terminal position. In a preferred embodiment, the Michael adducts are formed from a polysiloxane having at least two terminal nucleophilic groups and a compound having at least two, preferably at least three α,β-unsaturated carbonyl groups. The polysiloxane additives thus prepared typically have at least two, preferably at least three, four, six or eight α,β-unsaturated carbonyl groups in a terminal position.

The reactants and the Michael adducts will now be described in greater detail.

### Reactants

### (i) Polysiloxane having at least one terminal nucleophilic group

The polysiloxanes having at least one terminal nucleophilic group comprise between 5 and 250 SiO-units. The polysiloxanes can have a linear polymer backbone or a branched structure wherein the polymer backbone comprises side chains. The polysiloxanes further comprise at least one, preferably more than one (e.g. at least 2) terminal primary or secondary amine groups, thiol groups or combinations thereof.
Typically, the polysiloxanes comprise repeating units of the formula -Si(R¹R²)-O-, optionally in combination with repeating units of the formula -Si(R⁵R⁶)-O -, wherein the groups R1, R2 and R5 independently represent an alkyl group or an aryl group. R6 represents an alkyl group containing a primary or secondary amine or a thiol group, preferably at a terminal position. This way α,β-unsaturated carbonyl groups can be introduced at side chains in the molecule. Suitable polysiloxanes include linear or branched polydialkyl siloxanes, polyalkylaryl siloxanes or polydiarylsiloxanes, wherein the amine or thiol groups are situated at the end of the polymer chain, i.e. in the end group of the polymer backbone and/or in a terminal portion of side chains.

Representative examples of polysiloxanes comprising a terminal nucleophilic group include those of the general formula:

X-Q₁-[Si(R⁵R⁶)-O]_{q}-[Si(R¹R²)O]ₚ-Si(R³R⁴)-Q₂-X'

wherein p represents an integer between 5 and 200 ; q is 0 or an integer between 1 and 50 and p+q is an integer between 5 and 250. Each R1, R2, R3, R4 and R5 independently represents an alkyl group or an aryl group. R6 represents a group -Q³-X". X, X' and X" independently represent H, a primary or secondary amine group or a thiol group, preferably at a terminal position. In the above formula at least one of X, X' or X" is not H. Q1, Q2 and Q3 each independently represent a linking group containing 1 to 10 carbon atoms, which may contain sulfur, nitrogen and/or oxygen atoms. In a preferred embodiment, X, X' or X" independently represent a primary or secondary amino group. In the above formula the groups -[Si(R⁵R⁶)-O]-and -[Si(R'R²)-O]- may be present in blocks or may be randomly distributed.

Particularly suitable polysiloxanes include primary and secondary amino terminated polysiloxanes. Representative examples include those of the formula:

NHR⁷-(CH₂)ₐ-[Si(R⁵R⁶)-O]_{q}- [Si(R¹R²)O]ₚ -Si(R³R⁴)-(CH₂)_{b}-NHR^{7'}

wherein a and b are integers from 1 to 20, p, q, R1, R2, R3, R4 and R5 are as defined above, R6 represents a group -Q³-NHR^{7"}, wherein Q3 is as defined above.
R7, R7' and R7" independently represent H or an alkylgroup having from1 to 30 carbon atoms, which may contain sulfur, nitrogen and/or oxygen. In a preferred embodiment, q is 0 and both R7 and R7' represent H.

Polysiloxanes having amine or thiol end groups are commercially available for example under the trade FLUID NH 15D, FLUID NH 40D, FLUID NH 130D (from Wacker, Germany), KF-8010, KF-8012, X-22-161 A, X-22-161 B, KF-8008 (diamine end groups), KF-665, KF-664 (amine-ending pendent groups) and X-22-167B (dithiol end groups), KF-2001, KF-2004 (thiol-ending pendent groups) (from Shin-Etsu, Japan).

### (ii) Compounds having α,β-unsaturated carbonyl groups

Compounds having at least two α,β-unsaturated carbonyl groups can be selected from a polyfunctional α,β-unsaturated ketone, acrylate, methacrylate, acrylamide, methacrylamide or maleimide. In a preferred embodiment, the α,β-unsaturated carbonyl groups are selected from acrylate and methacrylate groups, more in particular from acrylate groups.
Suitable examples of polyfunctional acrylates include, for example, 1,4-butanediol diacrylate, 1,6-hexanediol diacrylate, tripropyleneglycol diacrylate, polyethyleneglycol diacrylate, trimethylolpropane triacrylate, ethoxylated triacrylates (e.g., ethoxylated trimethylolpropane triacrylate), propoxylated triacrylates (e.g., propoxylated glycerol triacrylate) and tris(2-hydroxyethyl)isocyanurate triacrylate. Further suitable acrylates include for example ditrimethylolpropane tetraacrylate, dipentaerythritol pentaacrylate, pentaerythritol tetraacrylate and ethoxylated pentaerythritol tetraacrylate.

### Polysiloxane Michael adducts

The polysiloxane Michael adducts obtained by the reaction of the reactants described above yield polysiloxanes comprising from 5 to 250 SiO-units and one or more terminal groups T that can be represented by the formulae

-N(R¹²)ᵣ-[CH²CHR⁹-C(=O)O-R¹⁰-(OCO-CR¹¹=CH₂)ₙ]₂₋ᵣ

or

-S-CH₂CHR⁹-C(=O)O-R¹⁰-(OCO-CR¹¹=CH₂)ₙ

wherein R12 represents a group having from 1 to 30 carbon atoms, which may contain sulfur, nitrogen and/or oxygen, r is 0 or 1, R10 represents a linking group containing from 1 to 30 carbon atoms, which may contain sulfur, nitrogen and/or oxygen atoms, R9 and R11 represent H or a CH3 group and n is 1 to 5.

In one particular embodiment, group T can be represented by the formula:

-N [-CH₂CH₂-C(=O)-O-R¹⁰-(OCO-CH=CH₂)ₙ]₂

wherein R10 represents a multifunctional alkylene group having from 1 to 30 carbon atoms and n is an integer from 1 to 5.

In one embodiment the Michael adducts may comprise polysiloxanes according to the general formula:

Aₓ-Q¹-[Si(R⁵R⁶)-O]_{q}- [Sᵢ(R¹R²)O]ₚ -Si(R³R⁴)-Q²-A'_{y}

wherein R1, R2, R3, R4 and R5 independently represent an alkyl group or an aryl group, R6 represents a side chain -Q³-A"_{z} ; Q1,Q2 and Q3 each independently represent a linking group containing 1 to 10 carbon atoms, which may contain sulfur, nitrogen and/or oxygen atoms, p represents an integer between 5 and 200 ; q is 0 or an integer between 1 and 50 and p+q is an integer between 5 and 250 ; x, y and z represent, independently from each other integers of 1 to 3 and wherein each A, A' and A" independently represent H or a terminal group T with the proviso that at least one of A, A' or A' is not H. In the above formula the groups -[Si(R⁵R⁶)-O]-and -[Si(R¹R²)-O]- may be present in blocks or may be randomly distributed.

In one particular embodiment q is 0 and both A and A' independently represent a group T.

The Michael adducts can be prepared by reacting i) a polysiloxane having at least one terminal nucleophilic group and ii) a compounds having α,β-unsaturated carbonyl groups in the presence of a solvent or in the absence of solvent. Suitable solvents include 2-propanol, 1-hexanol, tetrahydrofuran (THF), toluene and halogenated solvents, such as C₄F₉OCH₃, C₄F₉OC₂H₅ and trifluorotoluene. The reaction is preferably done in the absence of a solvent.

The reaction can be done in the presence of a basic or acidic catalyst or in the absence of a catalyst. Suitable catalysts include LiClO₄, 1,8 diazabicyclo [5.4.0] undec-7-ene] (DBU) and stannous octanoate.

The reaction is typically done at a temperature of at least 35°C, preferably at least 45°C or higher than 50°C. Higher reaction temperature is preferred to obtain a complete conversion of the reactants i) and ii). For example during the reaction of a polysiloxane i) having at least one primary amine group with a compound ii) having α,β-unsaturated carbonyl groups, steric hindrance may occur after one hydrogen of the NH2-group is exchanged. A temperature of at least 35 °C is preferably used to make sure that the second N-H bond will participate in the reaction and thus provide full conversion of the reactants.

It is understood that the polysiloxane Michael adducts may be complex mixtures and may contain mixtures of the polymers described above or mixtures of the polymers as described above and other reaction products or by-products. It is also understood that the specific composition of the polysiloxane units of the Michael adducts depends on the polysiloxanes used as reactants. Consequently, the polysiloxane Michael adducts comprise a polysiloxane unit comprising between 5 and 250 SiO-units. The polysiloxane units can have a linear polymer backbone or a branched structure wherein the polymer backbone comprises side chains. Typically, they comprise repeating units of the formula -Si(R¹R²)-O-, optionally in combination with repeating units of the formula -Si(R⁵R⁶)-O -, wherein the groups R1, R2 and R5 independently represent an alkyl group or an aryl group and R6 represents a side chain. The repeating units may be present as blocks or may be randomly distributed.
Suitable polysiloxanes units include linear or branched polydialkyl siloxane units, polyalkylaryl siloxane units or polydiarylsiloxane units.

### B. Compounds having at least two free radical polymerizable groups

The curable compositions provided herein comprise one or more compounds having at least two free radical polymerizable groups. With the term 'free radical polymerizable group' as used herein is meant a group capable of undergoing a free radical reaction when exposed to radicals generated by decomposition of a suitable initiator under heat and/or radiation, such as actinic radiation or e-beam radiation. Examples of suitable free radical polymerizable groups include ethylenically unsaturated groups selected from, vinyl groups, such as in vinyl ethers, vinyl esters, vinyl ketones or vinyl amides ; allyl groups, such as in allyl esters, allyl ethers ; acryl and methacryl groups, such as in acrylates and methacrylates, acrylamides and methacrylamides, maleates, fumarates and maleimides. Of these, vinyl groups, acrylates and methacrylates are preferred.

The compounds typically comprise a hydrocarbon group and at least two ethylenically unsaturated groups. Such compounds are well known and commercially available. Useful compounds include di(meth)acryl containing compounds such as 1,3- butylene glycol diacrylate, 1,4-butanediol diacrylate, 1,6-hexanediol diacrylate, 1,6- hexanediol monoacrylate monomethacrylate, ethylene glycol diacrylate, alkoxylated aliphatic diacrylate, alkoxylated cyclohexane dimethanol diacrylate, alkoxylated hexanediol diacrylate, alkoxylated neopentyl glycol diacrylate, caprolactone modified neopentylglycol hydroxypivalate diacrylate, caprolactone modified neopentylglycol hydroxypivalate diacrylate, cyclohexanedimethanol diacrylate, diethylene glycol diacrylate, dipropylene glycol diacrylate, ethoxylated bisphenol A diacrylate, hydroxypivalaldehyde modified trimethylolpropane diacrylate, neopentyl glycol diacrylate, polyethylene glycol diacrylate, propoxylated neopentyl glycol diacrylate, tetraethylene glycol diacrylate, tricyclodecanedimethanol diacrylate, triethylene glycol diacrylate, tripropylene glycol diacrylate.
Further suitable compounds include higher functional (meth)acrylate monomers. Examples include tri(meth)acryl containing compounds such as pentaerythritol triacrylate ("PET3A"), commercially available for example as SR444 (Sartomer, Arkema-group, Colombes Cedex, France). Further examples include glycerol triacrylate, trimethylolpropane triacrylate, ethoxylated triacrylates (e.g., ethoxylated trimethylolpropane triacrylate, propoxylated triacrylates (e.g., propoxylated glyceryl triacrylate, propoxylated trimethylolpropane triacrylate. Further suitable compounds include for example pentaerythritol tetraacrylate ("PET4A"), commercially available for example as SR295 (Sartomer, Arkema-group, Colombes Cedex, France). Further examples include ditrimethylolpropane tetraacrylate, dipentaerythritol pentaacrylate, ethoxylated pentaerythritol tetraacrylate and caprolactone modified dipentaerythritol hexaacrylate. Further examples of polyfunctional acrylates include oligomeric (meth)acryl compounds such as, for example, urethane acrylates, such as aliphatic urethane di-and triacrylates, commercially available from Sartomer, Arkema-group, Colombes Cedex, France, polyester polyacrylates, epoxy polyacrylates ; tris(2-hydroxyethyl)isocyanurate triacrylate and combinations thereof, such as aliphatic polyester/polyether based urethane polyacrylate oligomers. Such compounds are widely available from vendors such as, for example, Sartomer, Arkema-group, Colombes Cedex, France ; Cytec Surface Specialties SA/NV, Drogenbos, Belgium and Aldrich Chemical Company, Wisconsin, USA.

Further examples include di-vinyl ethers, such as 1,4-butane diol divinyl ether, diethylene glycol divinyl ether, cyclohexane dimethanol divinyl ether and triethylene glycol divinyl ether, all commercially available from BASF.
In a particular suitable embodiment, the compounds comprise at least three (meth)acrylate functional groups and include commercially available examples such as trimethylolpropane triacrylate (TMPTA) available under the trade designation "SR351", pentaerythritol tri/tetraacrylate (PETA) available under the trade designation "SR444" or "SR494", dipentaerythritol pentaacrylate available under the trade designation"SR399" and aliphatic polyester/polyether based urethane diacrylate oligomers commercially available under the trade designation "CN 981", all available from Sartomer, Arkema-group, Colombes Cedex, France. Mixtures of compounds having at least two free radical polymerizable groups are of particular interest.

### Curable coaxing composition

To facilitate curing, the curable compositions typically comprise at least one free-radical thermal initiator and/or photoinitiator. Useful free-radical thermal initiators include, for example, azo, peroxide, persulfate, and redox initiators, and combinations thereof.
Useful free-radical photoinitiators include, for example, those known as useful in the UV curing of acrylate polymers. Such initiators include aromatic ketones such as benzophenone, anthraquinone, acetophenone, benzoin and benzoin ethers and their derivatives; acylphosphine oxide (APO) and bisacylphosphine oxide (BAPO). Free radial photoinitiators are commercially available and include those available from BASF under the trade designation "IRGACURE", "LUCIRIN" and "DAROCUR". Combinations of two or more photoinitiators may be used.

Generally, suitable initiator concentrations are from about 0.1% to about 10% by weight, particularly suitable between about 0.5% and about 7% by weight based on the total weight of the reactive compounds a) and b). The curable composition can be cured at ambient temperature in an inert atmosphere. In a preferred embodiment, the curable composition may be cured at ambient temperature in the presence of air.

In order to increase the cure speed, in particular when curing is done in the presence of air, a cure accelerator or synergist can be added in amounts up to 5 % by weight based on the total weight of the curable compounds. Useful examples of cure accelerators include amino functional acrylates, such as for example EBECRYL™ P116, commercially available from Cytec Surface Specialties and Speedcure DMB {2-(dimethylamino)benzoate} available from Lambson.

The curable compositions may optionally be diluted with solvents, including alcohols such as 2-propanol. The compositions may further include other optional additives. For example, the compositions may include antistatic agents, wetting agents, waxes, levelling agents, light and/or UV- stabilizers, UV-absorbers, ozon stabilizers, antioxidants, inhibitors, fillers, lubricants, pigments, dyes, flow agents and viscosifiers.

### Application of the curable coating compositions

The curable compositions can be applied directly onto at least a portion of a surface of the substrate with or without using a primer. Primers may be used to improve adhesion of the coating composition to the surface of the film. Suitable primers include primers for paints and coatings as is known in the art. Suitable commercially available examples include AP111 and 3M™ Adhesion Promoter 4298 (available from 3M), SHP 401 (available from Momentive) and Keim Silan Primer (alkoxyalkyl silane, available from Keim Paints). After drying and optionally curing the primer the coating composition can then be applied onto the primer. In general, the curable composition can be applied with good adhesion to the surface, without use of a primer.

The coating composition is applied onto the surface of the substrate in amounts sufficient to produce a coating that provides soil and stain resistance, stain repellency and easy-clean properties. Typically the coating thickness after curing is between 0.1 and 50 µ, preferably between 1 and 20µ.

A wide variety of coating methods can be used to apply the curable coating composition. Suitable methods of application include brushing, spraying, dipping, rolling, spreading, bar coating and the like. A preferred coating method for application of the curable coating composition includes spray application and bar coating.

A substrate to be coated can typically be contacted with the coating composition at ambient temperature (i.e. between 10°C and 35°C). An optional air drying step can be included when the coating composition comprises a solvent. Following application and/or optional drying the coated substrates can be cured thermally or with an ultraviolet (UV) curing device. Curing can be done in the presence of air or under inert atmosphere with a total UV dose sufficient to cure the coating.

The coating composition can be used to provide a protective coating on a variety of coated or uncoated substrates. It has been found that the coating compositions can be coated particularly well on synthetic and natural surfaces including polymeric materials, such as those comprising a polymer selected from the groups consisting of polycarbonates, polyolefins, ABS (acrylonitrile-butadiene-styrene polymers), polyvinylchloride (PVC), polyacrylates, polymethacrylates, polyesters, polyamides and copolymers and blends thereof. Further useful substrates include those containing a surface of plywood, steel, aluminium, messing, silver, gold, glass and ceramics.
An advantage of the curable compositions provided herein is their good adherence to surfaces described above. Substrates having a coated surface provided herein typically have high soil resistance and are easy to clean. Soil or stains made with paints including graffiti paints or (permanent) marker pens do not attach to the coated surface or do not penetrate into the surface. Accordingly, the coated substrates typically have easy- to- clean properties and easy wipe-off of attached soil. Soil and stains made with paints or marker, can typically conveniently be removed with a wipe, optionally in the presence of a solvent, such as 2-propanol. Typically no aggressive cleaning agents need to be used for cleaning the stained or soiled surface.

Exemplary embodiments of the disclosure include:
Embodiment 1. A curable composition comprising
a. more than 50 % by weight of one or more compounds having at least two free radical polymerizable groups and
b. at least 0.1 % by weight of one or more polysiloxane additives comprising from 5 to 250 SiO-units and one or more terminal groups T selected from

   -N(R¹²)ᵣ-[CH²CHR⁹-C(=O)O-R¹⁰-(OCO-CR¹¹=CH₂)ₙ]₂₋ᵣ

   or

   -S-CH₂CHR⁹-C(=O)O-R¹⁰-(OCO-CR¹¹=CH₂)ₙ

   wherein R12 represents a group having from 1 to 30 carbon atoms, which may contain sulfur, nitrogen and/or oxygen, r is 0 or 1, R10 represents a linking group containing from 1 to 30 carbon atoms, which may contain sulfur, nitrogen and/or oxygen atoms, R9 and R11 represent H or a CH3 group and n is 1 to 5.
Embodiment 2. The curable composition according to embodiment 1 wherein the polysiloxane additives comprise the Michael adducts of a polysiloxane having from 5 to 250 SiO-units and having at least one terminal nucleophilic group, selected from a primary or secondary amino group or a thiol group, and a compound having at least two α,β-unsaturated carbonyl groups and wherein the Michael adduct is obtainable at a temperature of at least 35°C.
Embodiment 3. The curable composition according to any one of the preceding embodiments further comprising a free radical initiator.
Embodiment 4. The curable composition according to embodiment 3 wherein the free radical initiator is a photoinitiator.
Embodiment 5. The curable composition according to any one of embodiments 2 to 4 wherein the polysiloxane has at least two primary amino groups.
Embodiment 6. The curable composition according to any one of preceding embodiments wherein the compound having at least two α,β-unsaturated carbonyl groups is selected from a polyfunctional α,β-unsaturated ketone, acrylate, methacrylate or acrylamide.
Embodiment 7. The curable composition according to any one of the preceding embodiments wherein the compound having at least two α,β-unsaturated carbonyl groups is selected from a polyfunctional acrylate.
Embodiment 8.The curable composition according to embodiment 7 wherein the compound having at least two α,β-unsaturated carbonyl groups, comprises a poly-functional acrylate selected from the group consisting of 1,6 hexanediol diacrylate, tripropyleneglycol diacrylate, trimethylolpropane triacrylate, pentaerythritol triacrylate, ditrimethylolpropane tetraacrylate, dipentaerythritol pentaacrylate, ethoxylated trimethylolpropane triacrylate and blends thereof. Embodiment 9. The curable composition according to embodiment 8 wherein the polyfunctional acrylate is selected from trimethylolpropane triacrylate and pentaerythritol triacrylate.
Embodiment 10. The curable composition according to any one of the preceding embodiments wherein the terminal group can be represented by the formula

   -N [-CH₂CH₂-C(=O)-O-R¹⁰-(OCO-CH=CH₂)ₙ]₂

   R10 represents a multifunctional alkylene group having 1 to 30 carbon atoms, and n is 1 to 5, preferably 2 to 4.
Embodiment 11. The curable composition according to any one of the preceding embodiments wherein said one or more polysiloxane additives can be represented by the general formula:

   Aₓ-Q₁-[Si(R⁵R⁶)-O]_{q}- [Si(R¹R²)O]ₚ -Si(R³R⁴)-Q₂-A'_{y}

   wherein R1, R2, R3, R4 and R5 independently represent an alkyl group or an aryl group, R6 represents a side chain -Q³-A"_{z} ; Q1,Q2 and Q3 each independently represent a linking group containing 1 to 10 carbon atoms, which may contain sulfur, nitrogen and/or oxygen atoms, p represents an integer between 5 and 200 ; q is 0 or an integer between 1 and 50 and p+q is an integer between 5 and 250 ; x, y and z represent, independently from each other integers of 1 to 3 and wherein each A, A' and A" independently represent H or a terminal group T with the proviso that at least one of A, A' or A" is not H.
Embodiment 12. The curable composition according to embodiment 11 wherein q is 0 and both A and A' independently represent a group T.
Embodiment 13. The curable composition according to any one of the preceding embodiments wherein said free radical polymerizable groups of compounds a) are ethylenically unsaturated groups selected from, vinyl groups, such as in vinyl ethers, vinyl esters, vinyl ketones or vinyl amides ; allyl groups, such as in allyl esters ; acryl and methacryl groups, such as in acrylates and methacrylates, acrylamides and methacrylamides, maleates, fumarates and maleimides. Embodiment 14. The curable composition according to embodiment 13 wherein said free radical polymerizable groups of compounds a) are selected from acrylate and methacrylate groups.
Embodiment 15. The curable composition according to any one of the preceding embodiments wherein the compounds a) are selected from 1,6-hexanediol diacrylate, trimethylolpropane triacrylate, pentaerythritol triacrylate, tripropyleneglycol diacrylate, dipentaerythritol pentaacrylate, oligomeric polyacrylates selected from polyester, polyether and/or polyurethane polyacrylates and blends thereof.
Embodiment 16. The curable composition according to any one of the preceding embodiments comprising from 0.1 to 40 % by weight of polysiloxane additives based on the total weight of the composition.
Embodiment 17. The curable composition according to any one of the preceding embodiments comprising the polysiloxanes in amounts between 0.2 and 30 % by weight based on the total weight of the composition.
Embodiment 18. The curable composition according to any one of the preceding embodiments comprising the polysiloxanes in amounts up to 20 % by weight based on the total weight of the composition.
Embodiment 19. Method of making a curable composition according to any one of the preceding embodiments comprising
   a. forming a Michael adduct by reacting at a temperature of at least 35°C:
      i. a polysiloxane having at least one terminal nucleophilic group selected from a primary or secondary amino group or a thiol group and
      ii. a compound having at least two α,β-unsaturated carbonyl groups
   b. mixing at least 0.1% by weight, based on the total weight of the composition, of the Michael adduct obtained in a) with at least 50% by weight, based on the total weight of the composition, of one or more compounds having at least two free radical polymerizable groups.
Embodiment 20. Method according to embodiment 19 further comprising adding a free radical initiator.
Embodiment 21. Method of providing a stain release and/or stain repellent coating on a substrate, comprising applying to at least a portion of a surface of the substrate a curable composition according to any one of embodiments 1 to 18 and curing the composition to obtain a coating.
Embodiment 22. Method according to claim 21 wherein the curing is done by UV initiated radiation.
Embodiment 23. A coated substrate obtainable by the method according to any one of embodiments 21 or 22.
Embodiment 24. The substrate according to embodiment 23 wherein the surface is selected from one of the following or combinations thereof: plywood, steel, aluminium, messing, silver, gold, glass, ceramics, polymeric material comprising a polymer selected from the groups consisting of polycarbonates, polyolefins, ABS (acrylonitrile-butadiene-styrene polymers), polyvinylchloride, polyacrylates, polymethacrylates, polyesters, polyamides and copolymers thereof.

The following examples are provided to further illustrate the compositions and methods provided herein. These following examples are provided to illustrate certain embodiments but are not meant to limit the invention thereto. Prior to that some test methods used to characterize materials and their properties will be described. Unless specified otherwise, percentages are percentages by weight with respect to the mass of the total compositions and add up in each case to 100 weight percent.

**ABBREVIATIONS**

| Abbreviations | Product | Availability |
|---|---|---|
| FLUID NH15D | α,ω polydimethylsiloxane diamine, Mₙ: 900-1300 | Wacker Chemie AG |
| TMPTA | Trimethylolpropane triacrylate, obtained as SR351 | Sartomer, Arkema-group |
| CN 981 | aliphatic polyester/polyether based urethane diacrylate oligomer | Sartomer, Arkema-group |
| TPDA | tripropyleneglycol diacrylate, available as SR306 | Sartomer, Arkema-group |
| LV SR399 | Dipentaerythritol pentaacrylate | Sartomer, Arkema-group |
| BHT | 2,6-di- t.butyl-4-methylphenol | Sigma-Aldrich |
| IRGACURE™ 500 | UV initiator | BASF |
| EBECRYL™ P116 | Amino acrylate | Cytec Surface Specialties |
| MEHQ | hydroquinone monomethylether | |
| MEK | Methylethyl ketone | |

### SYNTHESIS OF POLYSILOXANE POLYACRYLATES (PAcr)

### PAcr-1: FLUID NH15D /TMPTA (30% FLUID NH15D in TMPTA)

A 500 ml reaction bottle was charged with 233.33 g TMPTA, 0.083 g MEHQ, 0.017 g phenothiazine and 100.00 g FLUID NH15D respectively. The bottle was sealed and reacted for 16 hrs in a pre-heated Launder-o-meter at 75°C. A clear, yellow, semi-viscous fluid was obtained.
Full conversion was confirmed by NMR spectroscopy.

PAcr-2 was the same as PAcr-1, but in this case BHT was used as inhibitor instead of MEHQ/Phenothiazine.

### COATING AND CURING

Coating compositions were prepared by mixing the polysiloxane polyacrylates with polyfunctional acrylate TMPTA and 3% EBECRYL™ P113 amino acrylate. Further were added 6 parts IRGACURE™ 500 UV initiator, 250 ppm MEHQ and 50 ppm phenothiazine based on 100 parts monomer mixture. The compositions were optionally diluted with solvent as indicated in the examples.

The coating compositions were coated on different substrates using bar coating application. using K Hand Coater Bar (available from RK Print Coat Ltd, UK) at room temperature. The coated substrates were subsequently cured with an ultraviolet (UV) curing device (available from American UV Co., Murray Hill, NY, USA) equipped with a medium pressure mercury H-bulb. Curing was done under air atmosphere with a total UV dose of about 2800 mJ/cm².

### APPLICATION OF STAINS

Stain stripes of 1 cm X 5 cm are applied on the coated substrate using different types of graffiti or permanent markers: Felt M180 black, Felt M180 blue, Edding 500 black, Edding 500 red and Artline blue.

### TEST METHODS

Respective data of tests shown in the following Examples and Comparative Examples are based on the following methods of measurement and evaluation criteria:

### a. Stain repellency test

The marker stain repellency was evaluated when applying the stain and was rated using a number between 1 and 5, where 1 indicates that the "marker drops fully beaded up" and 5 refers to "marker paint wets the surface completely".

### b. Ease of stain removal

The ease of stain removal via rubbing with a dry cotton cloth was rated on a scale from 1 to 3 wherein 1 means "easy removal" ; 2 : "medium" and 3 : "difficult removal".

### c. Stain resistance

After the stain was removed by rubbing for 20 seconds with a dry cotton cloth, the residual stain was visually rated using a number between 1 and 8, where 1 means "completely stained" and 8 refers to "no stain left"

### d. MEK resistance

A drop of MEK solvent was applied on the surface. After 30 seconds the drop was wiped off. Observation was made whether the coating was attacked by the solvent.

### EXAMPLES

### Examples 1 to 4, comparative examples C-1 to C-4 and Reference Ref-1

In examples 1 to 4 and comparative examples C-1 to C-4, MAKROLON polycarbonate sheets (3mm thick), obtainable from Bayer Sheet, were coated with the coating compositions indicated in table 1 using a 12µ K-bar coater bar. The coated sheets were cured under air atmosphere with a medium pressure mercury H-bulb, with a total intensity of about 2800 mJ/cm² total UV light. The coated sheets and an uncoated sheet (Ref-1) were stained with an Artline blue permanent marker according to the method outlined above. After measuring the stain repellency and the easy-clean properties (ease of stain removal and stain resistance) were evaluated via rubbing with a dry cotton cloth. The MEK resistance was evaluated according to the method outlined above. All coated samples were found to be resistant to MEK. The results of the other tests are recorded in table 2.

**Table 1: Coating compositions (% by weight)**

| Ex | TMPTA | PAcr-1 | TPGDA | LV SR 399 | CN981 | Ebecryl P116 |
|---|---|---|---|---|---|---|
| 1 | 62 | 10 | 10 | 15 | / | 3 |
| 2 | 67 | 10 | 20 | 15 | / | 3 |
| 3 | 47 | 10 | 40 | / | / | 3 |
| 4 | 47 | 10 | / | / | 40 | 3 |
| C-1 | 72 | / | 10 | / | / | 3 |
| C-2 | 77 | / | 20 | / | / | 3 |
| C-3 | 57 | / | 40 | / | / | 3 |
| C-4 | 57 | / | / | / | 40 | 3 |

**Table 2: Test results (Artline blue permanent marker)**

| Example | Stain repellency | Ease of stain removal | Stain resistance |
|---|---|---|---|
| 1 | 1 | 1 | 8 |
| 2 | 1 | 1 | 8 |
| 3 | 1 | 1 | 8 |
| 4 | 1 | 1 | 8 |
| C-1 | 5 | 3 | 3 |
| C-2 | 5 | 3 | 3 |
| C-3 | 5 | 3 | 3 |
| C-4 | 5 | 3 | 3 |
| Ref-1 | 5 | 3 | 3 |

### Examples 5 and 6, comparative example C-5 and reference Ref-2

In examples 5 and 6 and comparative example C-2, coating compositions as given in Table 3 were prepared in IPA (30% solids). PVC lamellae (obtainable from Grando GmbH) were spray coated with the coating compositions using a flow of 60 ml/min and 2 bar pressure (double cross). After air drying for 5 min, the coated samples were UV-cured with a medium pressure mercury H-bulb under air atmosphere with a total intensity of about 2800 mJ/cm² total UV light. The coated substrates and an uncoated sample (Ref-2) were stained with different permanent markers. After measuring the stain repellency properties the easy-clean properties (ease of stain removal and stain resistance) were evaluated via rubbing with a dry cotton cloth. The results are recorded in table 4.

**Table 3: Coating compositions (% by weight)**

| Ex | TMPTA | PAcr-2 | Ebecryl P116 |
|---|---|---|---|
| 5 | 87 | 10 | 3 |
| 6 | 87 | 10 | 3 |
| C-5 | 97 | / | 3 |

**Table 4: Test results**

| Ex | Artline blue | | | Felt Black | | | Edding 500 black | | |
|---|---|---|---|---|---|---|---|---|---|
| | Stain repellency | Ease of stain removal | Stain resistance | Stain repellency | Ease of stain removal | Stain resistance | Stain repellency | Ease of stain removal | Stain resistance |
| 5 | 1 | 1 | 8 | 1 | 1 | 8 | 1 | 1 | 8 |
| 6 | 1 | 1 | 8 | 1 | 1 | 8 | 1 | 1 | 8 |
| C-5 | 5 | 3 | 2 | 5 | 3 | 2 | 5 | 3 | 2 |
| Ref-2 | 5 | 3 | 2 | 5 | 3 | 2 | 5 | 3 | 2 |

## Claims

1. A curable composition comprising
a. more than 50 % by weight of one or more compounds having at least two free radical polymerizable groups and
b. at least 0.1 % by weight of one or more polysiloxane additives comprising from 5 to 250 SiO-units and one or more terminal groups T selected from
-N(R¹²)ᵣ-[CH²CHR⁹-C(=O)O-R¹⁰-(OCO-CR¹¹=CH₂)ₙ]₂₋ᵣ
or
-S-CH₂CHR⁹-C(=O)O-R¹⁰-(OCO-CR¹¹=CH₂)ₙ
wherein R12 represents a group having from 1 to 30 carbon atoms, which may contain sulfur, nitrogen and/or oxygen, r is 0 or 1, R10 represents a linking group containing from 1 to 30 carbon atoms, which may contain sulfur, nitrogen and/or oxygen atoms, R9 and R11 represent H or a CH3 group and n is 1 to 5.

2. The curable composition according to claim 1 wherein the polysiloxane additives comprise the Michael adducts of a polysiloxane having from 5 to 250 SiO-units and having at least one terminal nucleophilic group, selected from a primary or secondary amino group or a thiol group, and a compound having at least two α,β-unsaturated carbonyl groups and wherein the Michael adduct is obtainable at a temperature of at least 35 °C.

3. The curable composition according to any one of claims 1 or 2 further comprising a free radical initiator.

4. The curable composition according to any one of the preceding claims wherein the compound having at least two α,β-unsaturated carbonyl groups is selected from a polyfunctional α,β-unsaturated ketone, acrylate, methacrylate or acrylamide.

5. The curable composition according to claim 4 wherein the compound having at least two α,β-unsaturated carbonyl groups, comprises a poly-functional acrylate selected from the group consisting of 1,6 hexanediol diacrylate, tripropyleneglycol diacrylate, trimethylolpropane triacrylate, pentaerythritol triacrylate, pentaerythritol tetraacrylate ditrimethylolpropane tetraacrylate, dipentaerythritol pentaacrylate, ethoxylated trimethylolpropane triacrylate and blends thereof.

6. The curable composition according to any one of the preceding claims wherein said one or more polysiloxane additives can be represented by the general formula:
Aₓ-Q¹-[Si(R⁵R⁶)-O]_{q}- [Sᵢ(R¹R²)O]ₚ -Si(R³R⁴)-Q₂-A'_{y}
wherein R1, R2, R3, R4 and R5 independently represent an alkyl group or an aryl group, R6 represents a side chain -Q³-A"_{z} ; Q1,Q2 and Q3 each independently represent a linking group containing 1 to 10 carbon atoms, which may contain sulfur, nitrogen and/or oxygen atoms, p represents an integer between 5 and 200 ; q is 0 or an integer between 1 and 50 and p+q is an integer between 5 and 250 ; x, y and z represent, independently from each other integers of 1 to 3 and wherein each A, A' and A" independently represent H or a terminal group T with the proviso that at least one of A, A' or A" is not H.

7. The curable composition according to any one of the preceding claims wherein said free radical polymerizable groups of compounds a) are selected from acrylate and methacrylate groups.

8. The curable composition according to claim 7 wherein the compounds a) are selected from 1,6-hexanediol diacrylate, trimethylolpropane triacrylate, pentaerythritol triacrylate, pentaerythritol tetraacrylate, tripropyleneglycol diacrylate, dipentaerythritol pentaacrylate, oligomeric polyacrylates selected from polyester, polyether and/or polyurethane polyacrylates and blends thereof.

9. The curable composition according to any one of the preceding claims wherein the curable composition comprises from 0.1 to 40 % by weight of polysiloxane additives based on the total weight of the composition.

10. Method of making a curable composition according to any one of the preceding claims comprising
a. forming a Michael adduct by reacting at a temperature of at least 35°C:
i. a polysiloxane having at least one terminal nucleophilic group selected from a primary or secondary amino group or a thiol group and
ii. a compound having at least two α,β-unsaturated carbonyl groups
b. mixing at least 0.1% by weight, based on the total weight of the composition, of the Michael adduct obtained in a) with at least 50% by weight, based on the total weight of the composition, of one or more compounds having at least two free radical polymerizable groups.

11. Method of providing a stain release and/or stain repellent coating on a substrate, comprising applying to at least a portion of a surface of the substrate a curable composition according to any one of claims 1 to 10 and curing the composition to obtain a coating.

12. Method according to claim 11 wherein the curing is done by radiation.

13. A coated substrate obtainable by the method according to any one of claims 11 or 12.

14. The substrate according to claim 13 wherein the surface is selected from one of the following or combinations thereof: plywood, steel, aluminium, messing, silver, gold, glass, ceramics, polymeric material comprising a polymer selected from the groups consisting of polycarbonates, polyolefins, ABS (acrylonitrile-butadiene-styrene polymers), polyvinylchloride, polyacrylates, polymethacrylates, polyesters, polyamides and copolymers thereof and combinations thereof.
